# EUROPEAN PATENT APPLICATION

(11) **EP 3 450 791 A1**
(43) Date of publication of application: **06.03.2019**
(21) Application number: 17188744.1
(22) Date of filing: 31.08.2017
(51) Int. Cl.: F16D 65/092

(54) **A FRICTION ELEMENT**

(71) Applicant: Meritor Heavy Vehicle Braking Systems (UK) Limited, Cwmbran, Gwent NP44 3XU (GB)
(72) Inventor: Gibbens, Peter, Cwmbran, Gwent NP44 3XU (GB); Howard, Alexander, Cwmbran, Gwent NP44 3XU (GB)
(74) Representative: Foot, Paul Matthew James

(57) **Abstract**

A friction element for mounting to an air actuated disc brake. The friction element comprises a volume of friction material (413) having a friction face arranged to contact and retard rotation of a brake rotor in use, a support face opposing the friction face and arranged to contact a portion of a caliper of a disc brake in use, and a resilient element (496) extending away from the support face in a direction generally perpendicular to a plane of the support face,. The resilient element is arranged to be resiliently deformable in a direction generally parallel to the plane of the support face, and have a surface arranged to engage a radially outer surface of the brake caliper.

## Description

### TECHNICAL FIELD

The present invention relates to a friction element. More particularly, but not exclusively, the present invention relates to a friction element for an air actuated disc brake. The present invention also relates to a heavy vehicle disc brake incorporating such a friction element.

### BACKGROUND

In air-actuated disc brakes, for use on heavy vehicles such as trucks and buses, brake pads are provided, which frictionally contact a rotor to slow rotation of the wheels of the vehicle when required.

Typically, pad springs are provided which locate in use between formations that project radially outwardly from the back plate of the brake pads and a pad strap, which engages the pad springs to retain the brake pads in the brake assembly in a radially outward direction. The pad springs are resilient and act to urge the pads radially inwardly, into contact with their corresponding abutments, to minimise rattling whilst allowing the inboard pad to slide. They also act as suspension between the pad strap and the brake pads, i.e. provide a damping effect to any permitted radial movement of the pads.

At the outboard side of the rotor, it is known for the outboard brake pad to be supported by a bridge portion of the caliper. The bridge portion typically includes a horizontal surface that the outboard brake pad is seated on, which also helps to ensure the brake pad is in the correct vertical location, in the radial direction, for correct function of the brake.

It would be desirable to simplify the locating arrangement, particularly at the outboard side of the rotor, to reduce the weight of the brake and reduce manufacturing costs.

### SUMMARY OF THE INVENTION

A first aspect of the invention provides a friction element for mounting to an air actuated disc brake. The friction element comprises:
a volume of friction material having a friction face arranged to contact and retard rotation of a brake rotor in use;
a support face opposing the friction face and arranged to contact a portion of a caliper of a disc brake in use; and
a resilient element extending away from the support face in a direction generally perpendicular to a plane of the support face.

The resilient element is arranged to be resiliently deformable in a direction generally parallel to the plane of the support face, and have a surface arranged to engage a radially outer surface of the brake caliper.

The resilient element helps to locate the friction element in the radial direction, as well as dampen vibration of the friction element in use. Two functions are therefore combined in a single component, reducing the complexity of a brake assembly.

The resilient element may be a spring.

The spring may be a curved or angled portion of sheet or wire material.

This arrangement is simple and cost-effective to manufacture.

The spring may be curved or angled about an axis substantially parallel to the support face.

The curve/angle helps provide the desired resilience.

The spring may be curved or angled about an axis generally normal to the support face.

The curve/angle helps provide the desired resilience.

The spring may be curved or angled to define a travel limit for resilient deflection thereof.

Restricting deflection to a defined amount enables the amount of movement of the friction element to be controlled.

An air gap may be defined between a free end of the spring and a radially upper surface of the radially outwardly extending portion of the spring.

The size of the air gap can be used to control the amount of damping of the friction element.

The spring may extend from the support face axially outwardly then radially outwardly and then radially inwardly.

The shape of the spring helps to ensure it contacts the caliper for radial location, and extends radially upwardly to enable the damping function of the resilient element.

The resilient element may be arranged to define a contact point that will engage a friction element retaining member when the friction element is installed in a disc brake.

Engagement between the resilient element and a friction element retaining member (also known as a pad strap) helps to ensure that the friction element is urged in the radially inward direction, and enables the resilient element to damp vertical movement of the brake.

The contact point may be arranged to be at a position further radially outward than a radially outermost extent of the friction material.

This helps to ensure that the resilient element contacts the friction element retaining member to provide the damping effect.

The resilient element may extend from the support face at a point closer to radially outermost extent of the friction material than to a midpoint of the element in a radial direction.

This helps to ensure the resilient member is near the top of the friction element, so it can engage the radially outer surface of the caliper.

The friction material may be mounted to a substantially rigid supporting plate having the support face, and the resilient element is secured to the supporting plate.

The resilient element may be secured to the supporting plate with a permanent fastening arrangement.

A permanent fastening arrangement such as rivets or adhesive means the resilient element can be manufactured separately and then the arrangement assembled at lower cost.

Alternatively, the resilient element may be integral with the support face.

The resilient element may extend away from the support face generally normal to the support face.

The spring may be generally lens shaped in profile, when viewed from the axial direction.

Advantageously, this shape is convenient to produce, minimising manufacturing costs. Further, the 'bow-shaped' upper and lower members provide the desired resilience.

A second aspect of the invention provides a heavy vehicle disc brake comprising a brake caliper, a first friction element and a second friction element, the caliper being arranged to apply a clamp force to a first friction element and a second friction element to be positioned adjacent opposing faces of a brake rotor, and at least one friction element as defined in the first aspect of the invention.

A friction element retaining member may extend over the first and second friction elements to retain them in the disc brake, and the resilient element may be arranged to engage the friction element retaining member and a radially outer surface of the brake caliper.

An air gap may be defined between the friction element retaining member and the resilient element.

The vertical movement of the friction element in use can be controlled by the size of the air gap.

### BRIEF DESCRIPTION OF THE DRAWINGS

Figure 1 is an isometric view of an example disc brake;
Figure 2 is a plan view of the disc brake of Figure 1, with a brake rotor in situ;
Figure 3 is an isometric view of the disc brake of Figure 1 from an inboard direction, with the outboard brake pad omitted for clarity;
Figure 4 is an isometric view of the disc brake of Figure 1 from an inboard direction, with the outboard brake pad and a caliper housing of the disc brake omitted for clarity;
Figure 5 is an isometric view showing an actuator arrangement of the disc brake of Figure 1;
Figure 6 is an isometric view of a disc brake viewed from an outboard direction;
Figure 7 is an isometric view of the disc brake of Figure 6, with part of a caliper housing of the disc brake omitted for clarity;
Figure 8 is a plan view of a disc brake;
Figure 9A is an isometric view of a spreader plate of a disc brake;
Figure 9B is a further isometric view of the plate of Figure 9A;
Figure 10A is an isometric view of a spreader plate;
Figure 10B is a further isometric view of the plate of Figure 10A;
Figure 11A is a cross-sectional view through an inboard-outboard radial plane of a brake, according to an embodiment of the present invention, further comprising a spring on the backplate of the outboard pad;
Figure 11B is a detail view of the outboard side of the caliper of the brake of Figure 11A,
Figures 12A, 12B and 12C are isometric, front and side views respectively of an outboard brake pad for fitting in the brake of Figure 11A;
Figures 13A, 13B and 13C are isometric, front and side views respectively of an alternative embodiment of an outboard brake pad for fitting in the brake of Figure 11A;
Figures 14A, 14B and 14C are isometric, front and side views respectively of a further alternative embodiment of an outboard brake pad for fitting in the brake of Figure 11A; and
Figure 15 is an isometric view of dual brake pads according to a further alternative embodiment, for fitting in the brake of Figure 11A.

### DETAILED DESCRIPTION

### Actuation

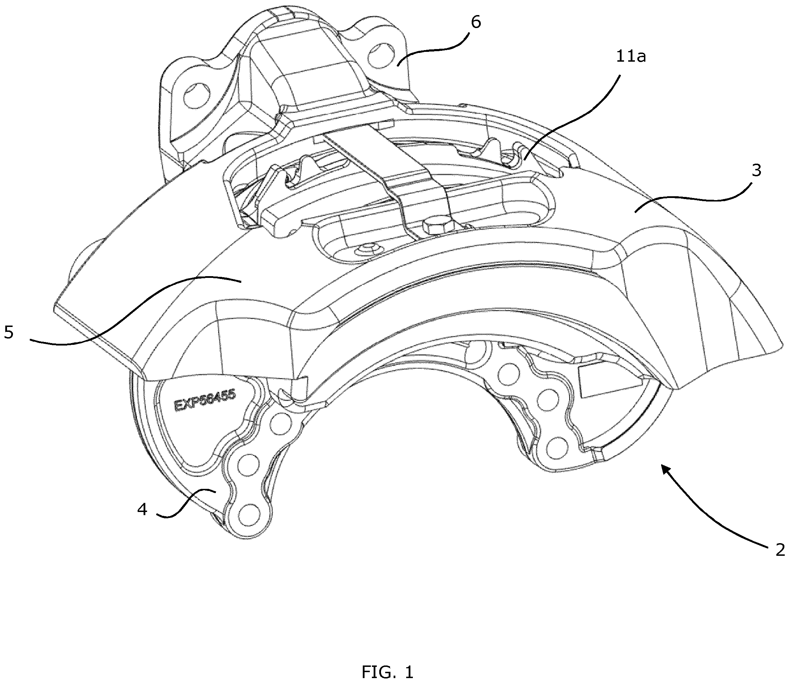

Figures 1, 2 and 3 illustrate an example of a disc brake 2 of a type that may be adapted to incorporate the present invention. The disc brake incorporates an actuation mechanism comprising a single piston and is suitable for use on heavy commercial vehicles. This type of disc brake is particularly, but not exclusively, suitable for lighter duty heavy vehicles, for example smaller trucks, or a trailer of a tractor-trailer combination.

Various orientations of the disc brake are described. In particular the directions inboard and outboard refer to the typical orientation of the disc brake when fitted to a vehicle. In this orientation, the brake pad closest to the centre of the vehicle is the brake pad directly actuated by an actuation mechanism, and being the inboard brake pad, and the outboard brake pad being the brake pad mounted to a bridge portion of the caliper. Thus inboard can be equated with an actuating side of the disc brake, and outboard with a reaction side. The terms radial, circumferential, tangential and chordal describe orientations with respect to the brake rotor. The terms vertical and horizontal describe orientations with the disc brake mounted uppermost on an axle, though it will be appreciated that in use such a disc brake may adopt any axle orientation depending upon packaging requirements of the vehicle.

The disc brake 2 comprises a caliper 3 having a housing 6 to accommodate the actuation mechanism, and which is slidably mounted on a carrier 4 for movement in an inboard-outboard direction.

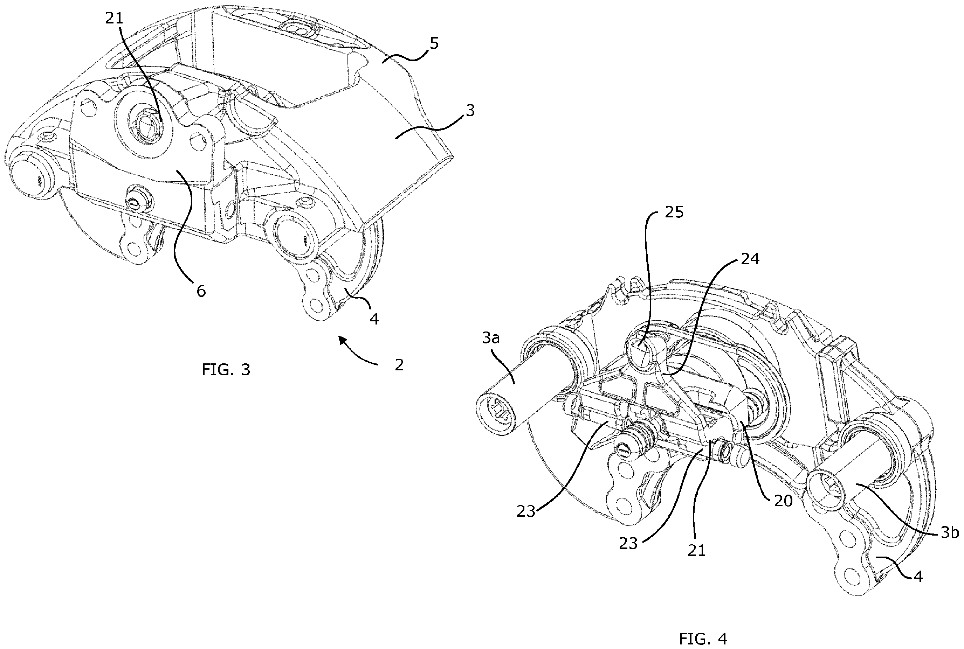

As can be seen best from the view in Figure 4 with the housing 6 omitted, the caliper 3 can slide on the carrier 4, by way of first and second support pins 3a, 3b. In this embodiment, the first support pin 3a is longer than the second support pin 3b.

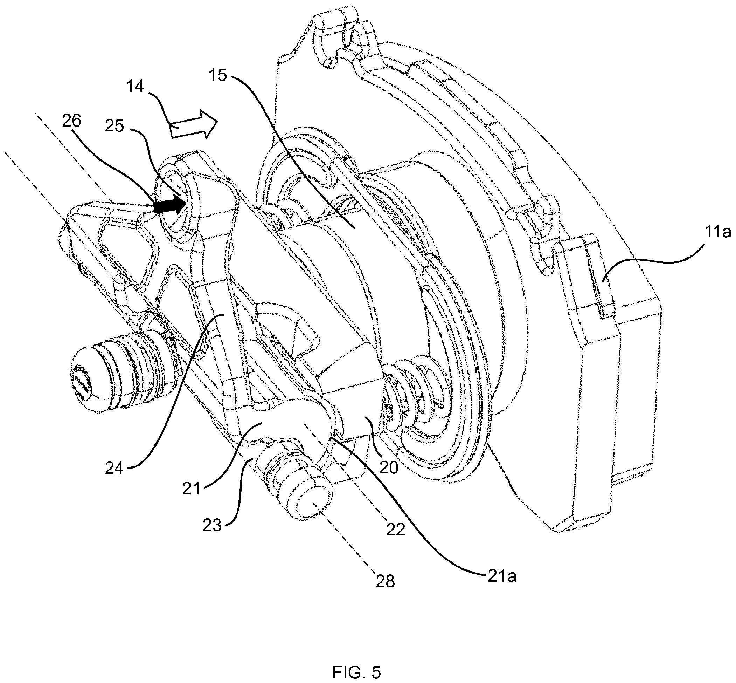

With reference to the cut-away view of Figure 5 in particular, the inboard actuation mechanism comprises a single brake piston 15, slideable in the direction of arrow 14 (i.e. inboard-outboard) relative to the rotor 10 (not shown in Figure 5, for clarity).

In order to urge the piston assembly in the direction of arrow 14, the operating shaft 21 is pivoted about rollers 23 which are located along a transverse axis 28. In this embodiment, there are two rollers 23, which are spaced from one another circumferentially. Each roller 23 is located on a single bearing surface (not shown), each bearing surface being curved to accept the roller 23. Convex surfaces 21a of the operating shaft 21 are located opposite the roller 23. The operating shaft has an axis 22, being the radial centre of the arc defined by surfaces 21a, which is parallel and offset from the axis 28. The curved surface 21a locates in a semi-circular recess of a yoke 20. A surface of the yoke 20 opposite the recess is in contact with an inboard end face of the piston 15. The operating shaft 21 further comprises a lever 24 having a pocket 25 adapted to receive an output push rod (not shown) of a brake actuator (e.g. an air chamber). The lever 24 is, in this embodiment, shaped as an inverted "U" (see Figure 4 in particular) and the line of action of the brake actuator (from pocket 25) is substantially over the line of action of the piston 15.

In other embodiments, another form of cam surface instead of the curved surface 21a of the operating shaft 21 may be employed (e.g. a plain bearing) and/or the arrangement may be reversed with the rollers 23 being in contact with the yoke 20, and the curved surface 21a being located in the recess of the caliper housing 6.

Application of a force in the direction of arrow 26 (Figure 5) causes pivoting movement of the operating shaft 21 about the rollers 23, and the curved surface 21a bears on the yoke 20. The offset axes 28 and 22 cause the yoke 20 to move in the direction of the piston 15, contacting the piston 15 and causing the piston 15 to urge the friction material of an inboard brake pad 11a directly against the rotor 10. A reaction force from the operating shaft 21 is transmitted to the bearing surface of the caliper 403 via the rollers 23 and is then transmitted to an outboard brake pad 11b via the bridge 5, with the friction material of the outboard pad being urged against the rotor 10, such that the brake pads clamp the rotor and effect braking through a frictional brake force.

The disc brake 102 of this embodiment comprises a caliper 103 which includes a housing 106 which supports and encloses the majority of the actuation mechanism and a bridge 105 extending outboard so as to straddle a rotor 110. The bridge or frame 105 is arranged to support an outboard brake pad 111b such that is can be brought into contact with the brake rotor 110. The disc brake 102 further comprises a carrier 104 which is arranged to slidably mount the caliper 103. The caliper further comprises a pad retention structure 175 to mount the outboard brake pad 111b. The outboard brake pad has sacrificial friction material 113b mounted to a substantially rigid metal supporting backplate 112b.

### Dual brake pads

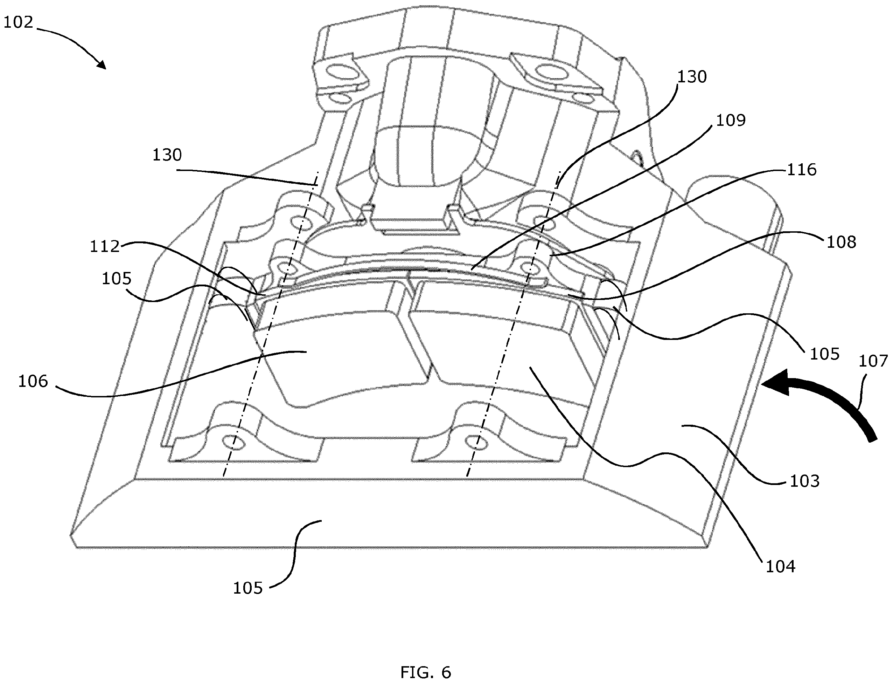

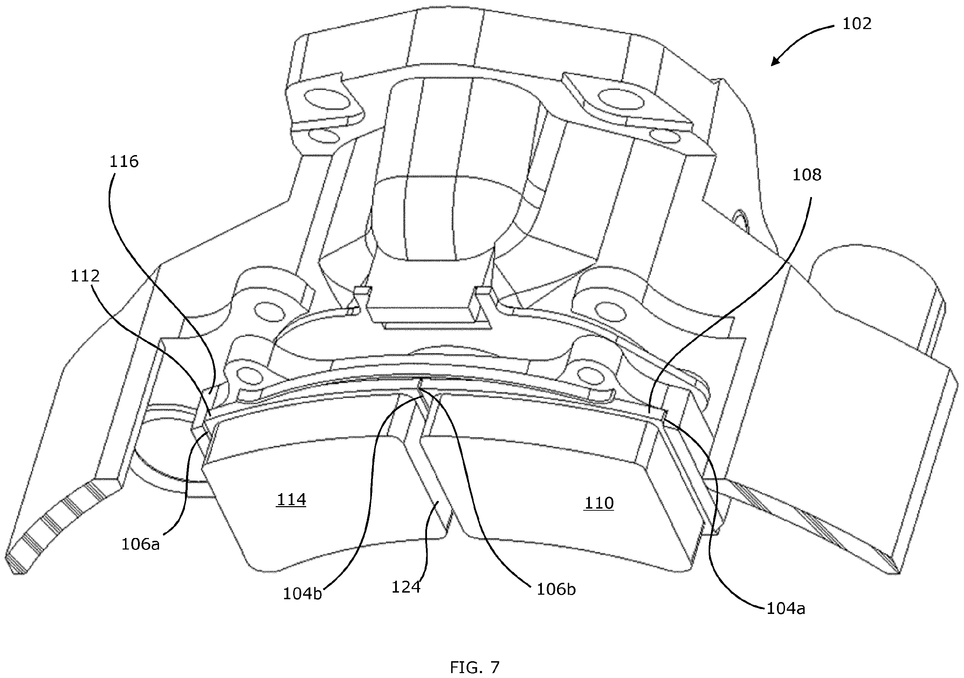

Referring now to Figures 6 and 7, a disc brake is indicated generally at 102. The disc brake 102 of this embodiment is similar to the example described above, and in particular is actuated in the manner described above. However, in this embodiment, instead of the single inboard brake pad described above and shown in Figures 1 to 5, first and second separate inboard brake pads 104, 106 are provided. The first pad 104 is on the right (looking at Figure 6), and acts as the leading pad. The second pad 106 is on the left, and acts as the trailing pad, in relation to the direction 107 a rotor will rotate during the usual (forward) direction of travel of a vehicle (not shown).

The first pad 104 comprises a backplate 108 and friction material 110 that is attached to the backplate 108, as shown in Figure 7. The second pad 106 comprises a backplate 112 and friction material 114 that is attached to the backplate 112. The backplates 108 and 112 are stamped or cast from a suitable metal such as steel to have a suitable strength for support of the friction material.

In this embodiment the first brake pad 104 and second brake pad 106 have the same swept area of friction material and are in effect a mirror image of each other. However, in other embodiments, the first and second brake pads are asymmetrical, and have different swept areas of friction material. For example, the first and second brake pads are in some embodiments asymmetrical about a radial centreline of the brake pads, set midway between the circumferential edges of the brake pads.

Both the first and second brake pads 104, 106 are mounted on a shared brake pad support arrangement. In this embodiment, the brake pad support arrangement is a spreader plate 116. As well as locating and supporting the first and second pads 104, 106, the spreader plate 116 engages surfaces of a brake carrier 105.

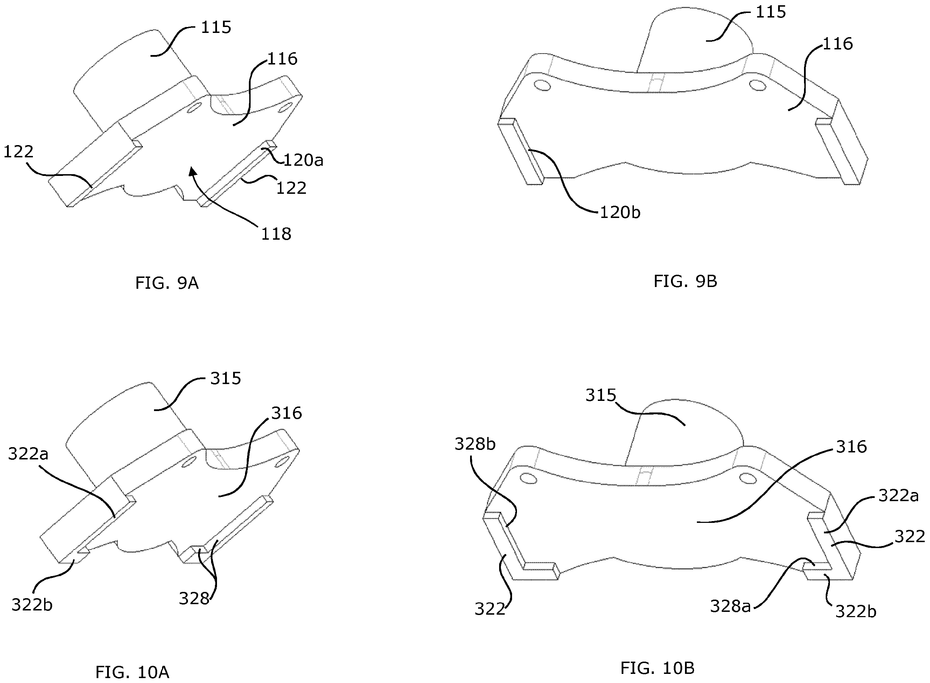

The backplates 108, 112 of the first and second brake pads 104, 106 are configured to fit adjacent to one another in an opening 118 of the spreader plate 116 (see Figures 9A and 9B, where the spreader plate is shown in isolation). The brake pads 104, 106 are held in place by a pad spring 109 extending along the backplates 108, 112. Support pins extending through apertures in the spreader plate 116 and the brake caliper 103 are schematically indicated on Figure 6 by axes 130. The support pins support the ends of the spring 109, and so retain the brake pads 104, 106 in place on the spreader plate 116, in conjunction with abutment surfaces of the spreader plate 116 described below. In other embodiments the support pin arrangement is not necessary, and an alternative arrangement is provided to guide the brake pads during actuation of the brake.

In an alternative embodiment a strap or straps are used to retain the pads. A central strap in combination with a pad spring can be used, or two straps, one extending over each brake pad. In other embodiments, the pad spring may not be required.

The first brake pad 104 has a circumferentially outer surface 104a and a circumferentially inner surface 104b. The second brake pad 106 has a circumferentially outer surface 106a and a circumferentially inner surface 106b. When the brake pads 104, 106 are located in the opening 118 of the spreader plate, the circumferentially inner surfaces 104b, 106b engage one another. The circumferentially outer surfaces 104a, 106a of the first and second brake pads 104, 106 engage corresponding vertical abutment surfaces 120a, 120b (see Figures 9A and 9B) of side steps 122 of the spreader plate 116. In this embodiment, the circumferentially inner and circumferentially outer surfaces 104b, 106b, 104a, 106a are surfaces of the backplates 108, 112.

As can be seen from Figure 7, when the first and second brake pads 104, 106 are located in the opening 118 of the spreader plate 116, the friction material 110 of the first brake pad 104 does not contact the friction material 114 of the second brake pad 106; there is a radial channel 124 defined between the friction material 110 of the first brake pad 104, and the friction material 114 of the second brake pad 106.

When the disc brake 102 is actuated, and the spreader plate 116 is moved towards the rotor by the actuation mechanism, the friction material 110, 114 of the first and second brake pads 104, 106 contacts the rotor, to retard rotation of the wheel. As the brake pads 104, 106 contact the rotor, a drag force acts on the brake pads 104, 106 in a circumferential direction. The force transmission path is from the friction material 110 of the first brake pad 104 (as it is the leading brake pad), through the circumferentially inner surface 104b of the first brake pad 104 to the circumferentially inner surface 106b of the trailing second brake pad 106, and then through the circumferentially outer surface 106a of the second brake pad 106 and to the vertical abutment surface 120b of the spreader plate 116. Force will also pass directly from the friction material 114 of the second brake pad 106 to the outer surface 106a of the second brake pad 106. The spreader plate 116 is configured to transmit substantially the entire braking induced torque load that would otherwise conventionally be transmitted directly from a brake pad to the carrier 105.

As the braking forces are reacted directly by the spreader plate 116, this arrangement allows for thinner backplates (e.g. 5mm or less, or potentially 3mm or less as opposed to 8mm or more as is conventional for heavy vehicles) to be used compared to brake pads of the prior art. This means that less material is needed for manufacture, which has cost and environmental benefits. Further, manufacturing two separate inboard brake pads rather than one large single brake pad may result in further cost savings. It is also easier to maintain the brake pad flatness during processing of the brake pad for smaller separate brake pads compared to a larger single brake pad. Cracking of the friction material due to thermal or mechanical effects is less likely, so that slot features to address cracking may not be required, and complexity of manufacture is reduced. As the brake pads are held by the spreader plate 116 the risk of the thinner backplate forming depressions in the abutment surfaces of the carrier 105 are mitigated. Holding the brake pads in the spreader plate 116 also reduces the risk of ejection of the brake pads via the gap between the carrier and the rotor as the spreader plate is thicker than the backplate of the brake pads, supports the backplates, and itself is supported by the carrier 105.

Having separate brake pads also enables different friction materials to be used on each brake pad. This can help reduce so called 'taper wear', where the leading edge of a conventional brake pad wears quicker than its trailing edge. In this case, the friction material 110 of the first brake pad 104 may be made from a more wear resistant material than the friction material 114 of the second brake pad 106, resulting in the two brake pads wearing at a more even rate.

In this embodiment, two individual brake pads are also used at the outboard side of the disc brake 102. First and second outboard side brake pads (not shown) are supported in a further brake pad support arrangement provided by an opening in the bridge 105 of the caliper 103. Generally vertical abutment surfaces of the opening react the forces from the outboard brake pads 104, 106 in use.

At the outboard side of the disc brake 102, taper wear typically reverses compared to the inboard side. Therefore, in this case, the outboard trailing brake pad has friction material of higher wear resistance than the leading brake pad, so that the brake pads wear at a generally even rate.

The first and second brake pads of other embodiments have alternative differing properties, such as temperature resistance, friction coefficient, desired noise, vibration and harshness (NVH) properties, squeal resistance and/or compressibility.

In an alternative embodiment, the disc brake has first and second inboard brake pads, and a single outboard brake pad. In a further alternative embodiment, the disc brake has first and second outboard brake pads, and a single inboard brake pad.

In an alternative embodiment, the disc brake has more than two inboard and/or outboard brake pads.

In this embodiment, friction element retaining members, also known as pad straps, may be required to retain the inboard and outboard brake pads.

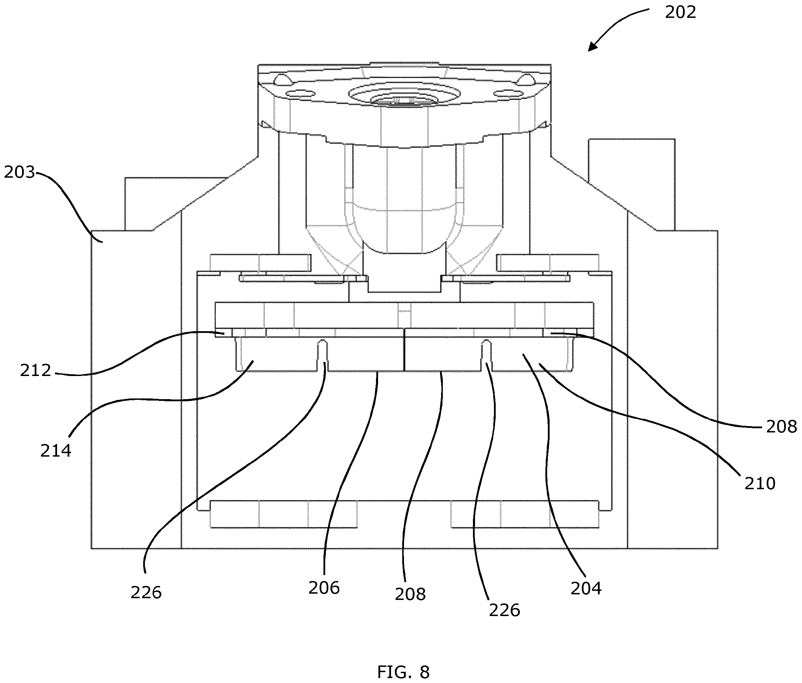

A further disc brake of a type that may be adapted to incorporate the present invention is shown in Figure 8, where features substantially the same as those of the disc brake of Figures 6 and 7 are given corresponding reference numbers with the prefix "2".

The disc brake 202 shown in Figure 8 has first and second inboard brake pads 204, 206 that differ from the disc brake of Figures 6 and 7. The friction material 210, 214 of each of the first and second brake pads 204, 206 defines a substantially vertically extending slot 226. The slots 226 inhibit cracking of the friction material due to thermal or mechanical effects.

As shown in Figure 8, the friction material 210, 214 of the brake pads 204, 206 is adjacent, rather than being separated by a channel as in the disc brake of Figures 6 and 7. The adjacent friction material improves transfer of load from the leading brake pad 204 to the trailing brake pad 206.

The disc brake 202 has outboard brake pads (not shown) also having friction material defining a substantially vertical slot.

A further example spreader plate is shown in Figures 10A and 10B, where features substantially the same as those of the previous embodiment are given corresponding reference numbers with the prefix "3".

Figures 10A and 10B show the spreader plate 316 with an alternative arrangement of side steps 322 providing abutment surfaces for the inboard brake pads. The side steps 322 are substantially L-shaped, with a generally vertical portion 322a and a generally horizontal portion 322b. The horizontal portions 322b extend circumferentially inwardly towards one another across the plate 316. The side steps 322 thus provide a brake pad abutment surface 328 having a generally vertical portion 328a and a generally horizontal portion 328b. Such an arrangement locates the brake pads in horizontal and vertical directions but still allows fitting in a solely radially inward direction, and may further reduce the risk of pad ejection and carrier abutment pitting issues.

Either spreader 116, 316 can be used with the disc brake 102, 202 of either of the embodiments shown in Figures 6 to 8. In both illustrated embodiments, the spreader plate 116, 316 is integral to a piston 115, 315. In an alternative embodiment, the spreader plate is separate to the piston. In an alternative embodiment, the brake actuation mechanism has two pistons. The two pistons are integral to the spreader plate. In a further embodiment where the brake actuation mechanism has two pistons, the pistons are separate to the spreader plate.

In an alternative embodiment, the brake pad support arrangement is the brake carrier. In such an embodiment, the brake actuation mechanism has a single or two pistons. A spreader plate can be used in such an embodiment to evenly distribute load between the two brake pads, with the spreader plate being supported in the carrier. Alternatively, no spreader plate is used, and the piston or pistons act directly on the backplates of the brake pads. In one alternative embodiment, the brake actuation mechanism has two pistons, with equal piston travel, and no spreader plate is used. In this embodiment, each piston acts on one of the inboard brake pads. The actuation force is thus evenly split, and taper wear is reduced. In a further alternative embodiment, the backplate of each brake pad has a formation comprising a lug or lugs extending therefrom away from the friction material that fit to a corresponding slot or recess in the spreader plate, instead of, or in addition to the steps 122, 322 in order to mount the brake pads to the spreader plate.

### Outboard pad springs

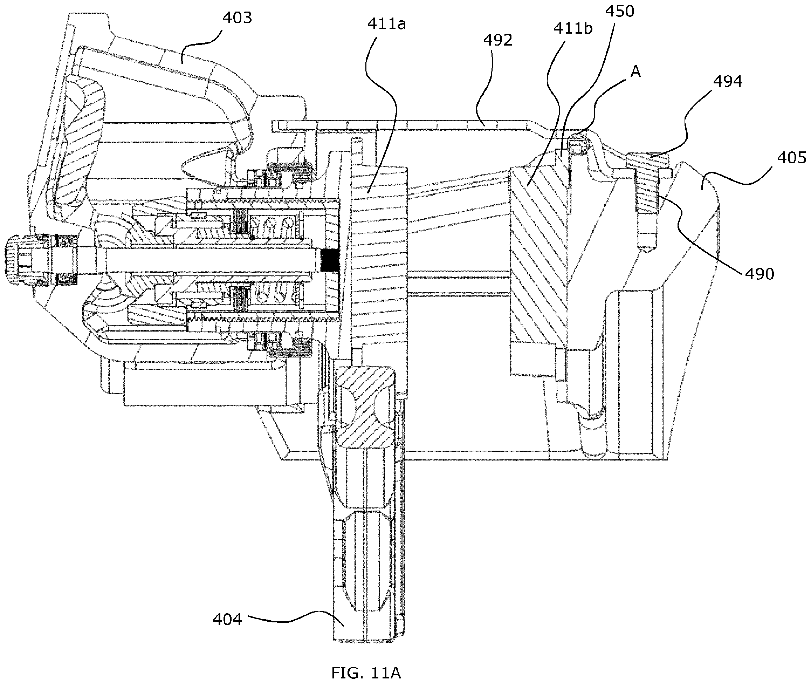

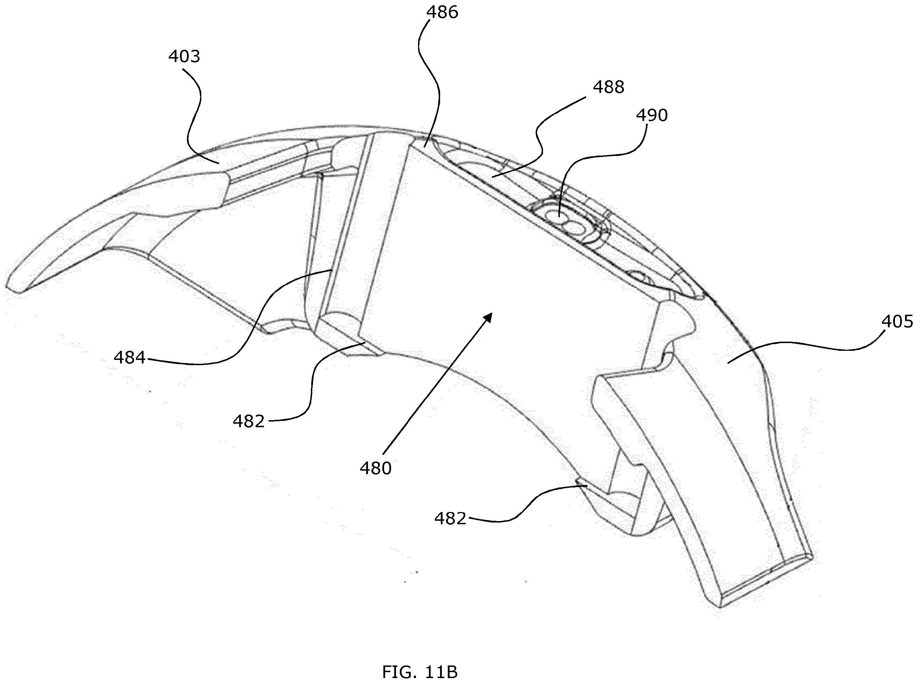

Figures 11A and 11B show a disc brake 402, according to an embodiment of the invention. The cutaway view of Figure 11B has a number of components hidden, for clarity. In this embodiment, a single inboard pad 411a and a single outboard pad 411b are provided. A second pad mounting structure is defined in the bridge 405 of the caliper 403, in the form of an outboard opening 480. Within the opening 480 are horizontal pad abutment surfaces 482 and vertical pad abutment surfaces 484, to react the backplate of the outboard pad 411b. The outboard pad 411b is therefore supported and reacted in a similar manner to the inboard brake pad 411a. Advantageously, the outboard pad 411b would not require a thick backplate, which would result in manufacturing cost savings, and potentially an overall weight saving in the disc brake.

A planar surface 486 is defined in the radially outer face of the bridge 405 of the caliper 403. The surface 486 is proximate to the radially outer end of the opening 480. Also, in the bridge 405, outboard of the planar surface 486, is a recessed portion 488. In this embodiment, the recessed portion 488 includes at least one aperture 490, which extends at least part-way into the bridge 405 of the caliper 403, in a radially inward direction.

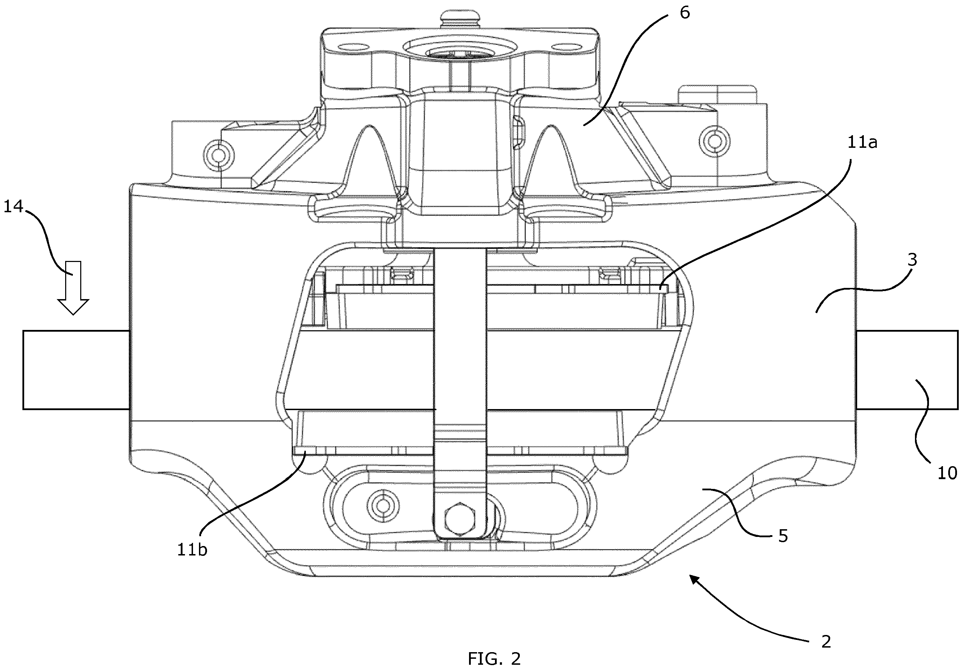

The pads 411a, 411b may be fitted in the openings 469 and 480 via a radial aperture 417 (best shown in Figure 2, which shows an equivalent arrangement), i.e. the pads 411a, 411b can be inserted (and removed) through the caliper 403 in a radial direction, even when the brake is assembled and the rotor is in place. In this embodiment, the aperture 417 has a generally parallelogram shape, to allow the inboard and outboard pads 411a, 411b to be offset from one another, but this need not be the case.

To retain the pads 411a, 411b in use, a pad retaining member, for example a strap 492, is provided that extends over the aperture 417. A bolt 494 (or other appropriate fastening component) passes through an outboard end of the pad strap 492 and into the aperture 490 in the bridge 405 of the caliper 403, to secure the pad strap 492 in place.

Typically in air actuated disc brakes, pad springs are provided which locate in use between formations that project radially outwardly from the back plate of the brake pads, and the pad strap 492. The pad springs are resilient and act to urge the pads radially inwardly, into contact with their corresponding abutments, to minimise rattling whilst allowing the inboard pad to slide. In this embodiment, a known type of pad spring is located between the inboard brake pad 411a and the pad strap 492 in this way.

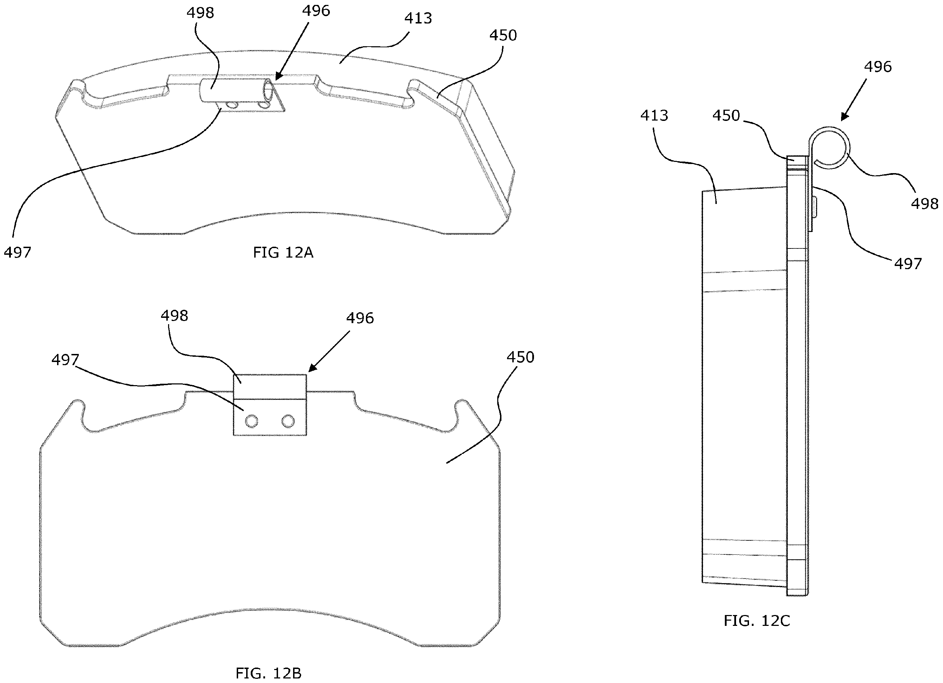

Between the outboard brake pad 411b and the pad strap 492 (i.e. at location A as shown on Figure 11A), however, is a different arrangement. Referring to Figures 12A, 12B and 12C, it can be seen that in this embodiment a separate resilient element, for example a spring component 496, is secured to the outboard surface of the backplate of the outboard brake pad 411b. In other words, the outboard friction element (i.e. the brake pad 411b) has a volume of friction material having a friction face, a support face opposing the friction face, and the spring 496 is secured to the support face. Typically, the spring 496 extends away therefrom in a direction generally perpendicular to a plane of the support face, i.e. generally normal to the support face. In this embodiment, the support face is of a backplate 450. The spring 496 is arranged to be resiliently deformable in a direction generally parallel to the plane of the support face, and have a surface arranged to engage the radially outer planar surface 486 of the brake caliper 403 (described in more detail below).

In this embodiment, the spring 496 is located adjacent the radially outer edge of the backplate (i.e. closer to a radially outward upper face of the brake pad than to a radial midpoint of the brake pad), in a generally central position (in the circumferential direction) that corresponds to the circumferential location of the pad strap 492 when the brake is assembled. The spring 496 has an attachment portion 497, and a resilient portion 498.

In this embodiment, the attachment portion is generally planar and rectangular, and is permanently secured to the backplate of the outboard pad 411b by way of rivets. Alternatively, the attachment portion could be spot-welded to the backplate, or peened to attach it to the backplate.

The resilient portion 498 projects from the backplate in a radially outward and outboard direction. In this embodiment, the resilient portion 498 is arranged to extend radially outwardly and outboard from the attachment portion 497, but the end of the resilient portion 498 then bends back towards the attachment portion 497, i.e. radially inwardly. This defines a curved generally circular shape in cross-section, as can be seen most clearly in Figure 12C. In other words, the spring is curved about an axis generally parallel to the support face. Both the air gap between the end of the resilient portion 498 and the attachment portion 497, and the fact that the spring 496 is typically made of resilient material, create the resilience of the spring 496. For example, the spring 496 could be made of spring steel.

Therefore, it will be appreciated that when the outboard brake pad 411b is located in the opening 480 of the bridge 405, the resilient portion 498 of the spring 496 will be located between the planar surface 486 and the pad strap 492. As the resilient portion 498 projects radially outwardly from the backplate 450 of the outboard pad 411b, the pad strap 492 will not contact the backplate 450 at all, and instead the spring 496 will act as suspension between the pad strap 492 and the outboard pad 411b, to damp vertical movement of the pad 411b. Additionally, the contact between the resilient portion 498 of the spring 496 and the planar surface 486 helps to locate the outboard pad 411b, as the pad 411b is substantially restricted from moving in the radially inward direction (apart from any minor radial movement due to the resilience of the spring 496). Therefore, the opening 480 of the bridge 405 could be modified to remove the horizontal abutment surfaces 482, with the outboard pad 411b being supported radially solely by the contact of the spring 496 and the planar surface 486. This may simplify manufacture of the caliper, as with fewer abutment surfaces required, machining could be simplified.

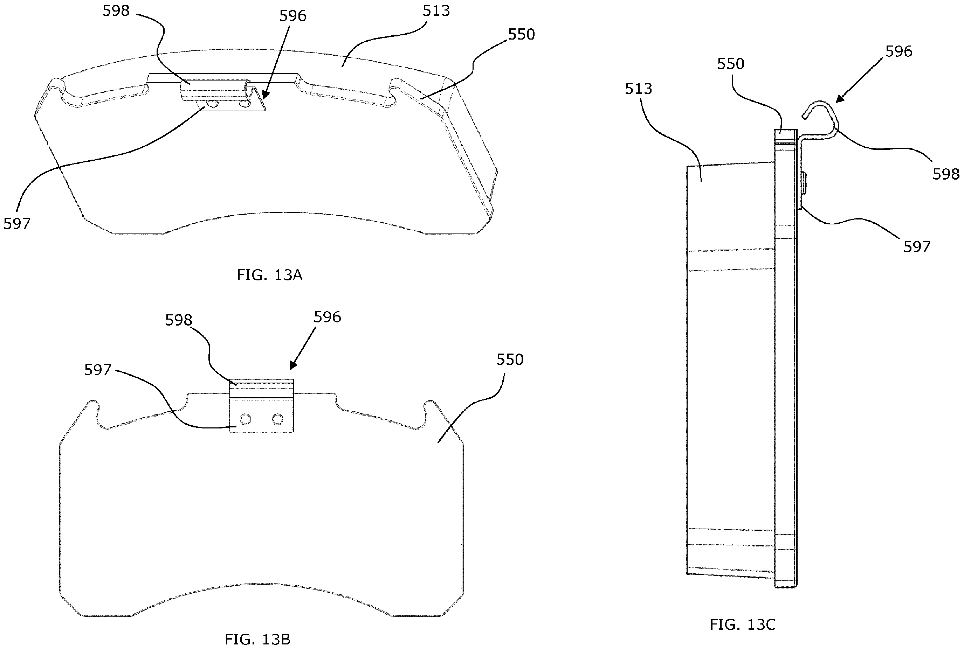

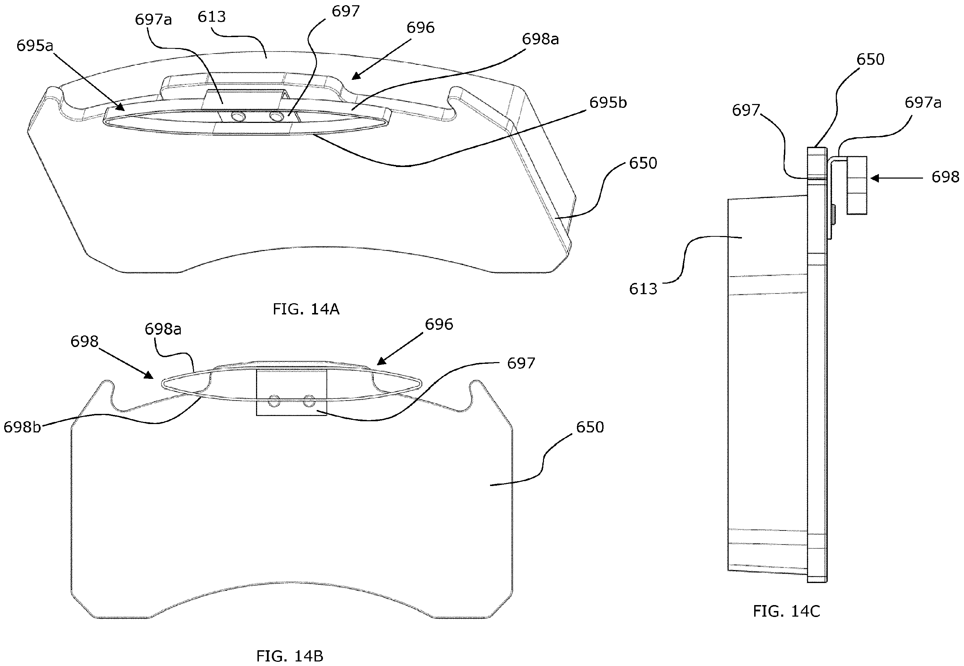

Figures 13A to 13C and Figures 14A to 14C show two alternative arrangements. In these arrangements, the function of the spring is the same, but the particular shape of the spring is varied. The disc brakes 502, 602 are otherwise the same as the disc brake 402.

Looking firstly at Figures 13A to 13C, a spring component 596 is provided. Like the spring of Figures 12A to 12C, the spring 596 has an attachment portion 597, and a resilient portion 598. Further, like the spring of Figures 12A to 12C, the spring is curved or angled to define a travel limit for deflection of the spring. In this embodiment, the attachment portion 597 is generally planar and rectangular, and is permanently secured to the backplate of the outboard pad 511b by way of rivets. The resilient portion 598 projects from the backplate in a radially outward and outboard direction. In this embodiment, the resilient portion 598 is arranged to extend outboard, i.e. generally perpendicular to the plane of the backplate, from the attachment portion 597 and then radially outwardly. The end of the resilient portion 598 then bends back inboard and radially inwardly, towards the attachment portion 597. This defines an angled generally triangular shape in cross-section, as can be seen most clearly in Figure 13C. In other words, the spring is curved about an axis generally parallel to the support face. Both the air gap between the end of the resilient portion 598 and the attachment portion 597, and the fact that the spring 596 is typically made of resilient material, create the resilience of the spring 596. The spring 596 can therefore act to locate the outboard pad 411b through contact with the planar surface 486 of the caliper 503, and the spring 596 also acts as suspension between the pad strap 492 and the outboard pad 511b.

Looking now at Figures 14A to 14C, a spring component 696 is provided. Like the spring of Figures 12A to 12C, the spring 696 has an attachment portion 697, and a resilient portion 698. Further, like the springs of Figures 12A to 12C and Figures 13A to 13C, the spring is curved or angled to define a travel limit for deflection of the spring. In this embodiment, the attachment portion 697 has a generally planar and rectangular portion, which is permanently secured to the backplate of the outboard pad 611b by way of rivets. The attachment portion 697 in this embodiment also has an upper projecting portion 697a which extends in an outboard direction from the backplate, i.e. generally perpendicular to the plane of the backplate, from the radially upper edge of the planar and rectangular portion of the attachment portion 697. The resilient portion 698 is made up of an upper strip portion 698a and a lower strip portion 698b. Both strips 698a, 698b are generally bow shaped, and connect to one another at each of their ends, to define a 'lens' shape in profile, as shown in Figure 14B particularly. In other words, the spring is curved about an axis generally normal to the plane of the support face. The strip portions 698a, 698b are made of resilient material, and so the resilient portion 698 itself is compressible. The upper strip portion 698a is attached to the upper projecting portion 697a of the attachment portion 697, to connect the attachment portion 697 to the resilient portion 698. It can be seen that in this embodiment, therefore, that there is no suspension directly between the pad strap 692 and the outboard pad 611b, as the resilient portion 698 does not extend radially outwardly of the upper edge of the backplate of the pad 611b. Instead, the lower strip portion 698b contacts the planar surface 686 of the caliper 603. As the resilient portion 698 is compressible, this provides suspension, as the outboard pad 611b is able to move radially inward and outward to a limited degree. The contact of the lower strip portion 698b and the planar surface 686 also locates the pad in the radial direction. In a further embodiment (not shown), the resilient portion 598 of Figures 14A - 14C may be inverted so that it is arranged radially outward of the upper projecting portion 597a.

Advantageously, the springs 496, 596, 696 of Figures 12A to 14C can perform two different functions in one component i.e. supporting or mounting the brake pads on the caliper or carrier in a radial direction and also providing the required resilience to damp radial movements of the pad. The springs can be cheaply manufactured, simply attached to the pads, and varied as required, to provide different levels of suspension. The location of the springs can also be varied to locate the pads in a range of radial positions, as required.

The location of the springs 496, 596, 696 could also act to foolproof fitting of the inboard and outboard brake pads, e.g. if a spring was only provided on the outboard brake pad, this would prevent the brake pads being fitted in the wrong location inboard/outboard, as the inboard pad would not be retained radially if located in the outboard position. Further, if the shape of the spreader plate and/or caliper housing were suitable, the outboard pad would not locate in the inboard position, as the spring would impinge on another component and prevent complete insertion thereof, and the pad retainer may not be fittable. Further, if a brake pad were to be attempted to be mounted in the reverse orientation in an inboard or outboard location, then incorrect filling may be prevented by the spring resting on the rotor and the pad being pad retainer not being fittable over it.

Alternatively, the arrangement of the spreader plate (e.g. the spreader plates shown in Figure 9A to 10B) could be altered such that a planar surface is provided for the spring to engage, to retain an inboard pad with a spring radially. With this arrangement, horizontal abutment surfaces would no longer be required on the spreader plate.

Further, the spring arrangements 496, 596, 696 would enable inboard and outboard pads that are identical, in terms of at least the shape of the backplates, but have different springs attached to the backplates of each, e.g. to have different mounting locations or provide foolproofing of pad fitting. This would provide manufacturing advantages, reducing costs as only one type of brake pad would need to be produced. In this regard, it can be seen that the backplate depicted in Figures 12A to 15 retain a profile with abutments on the radially upper edge of the backplate to permit the mounting of a conventional pad spring.

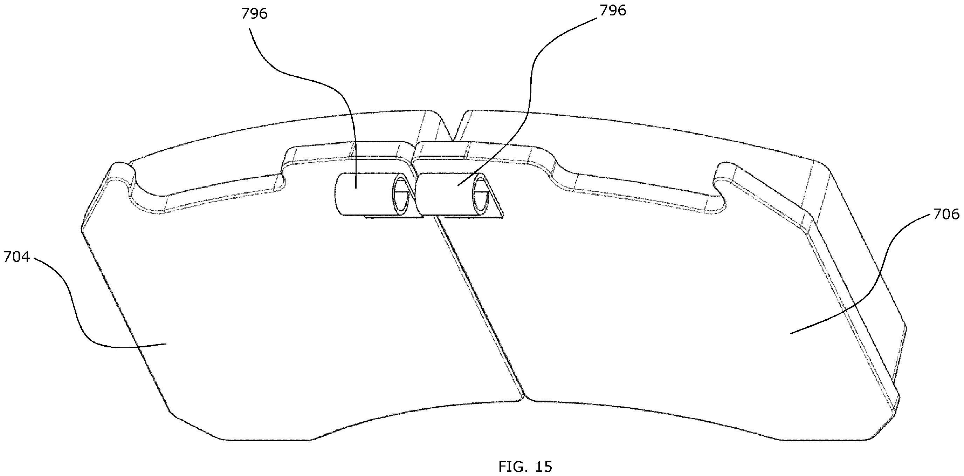

An alternative brake pad arrangement is shown in Figure 15. In this embodiment, instead of a single inboard brake pad, first and second separate brake pads 704, 706, e.g. like the pads 104, 106 of Figure 6, are provided.

This individual pad arrangement could also be used at the outboard side of the brake, by utilising the spring components described above. As shown in Figure 15, the springs 796 (equivalent to the springs 496 from the embodiment of Figures 12A to 12C) could be included on separate outboard pads 704, 706. These springs 796 will engage the planar surface 786 of the bridge 705 of the caliper 703 to locate the outboard pads. The vertical abutment surfaces 784 of the opening 780 will react the forces from the brake pads 704, 706 in use.

In this embodiment, two pad straps 792 may be required to contact the springs 976. Alternatively, a pad strap 792 with increased width could be provided.

At the outboard side of the brake, the taper wear typically reverses compared to the inboard side. Therefore, in this case, the trailing pad could have more wear resistant friction material than the leading pad, so the pads wear closer to the same rate.

It is clear that all the springs described 496, 596, 696, 796 are arranged to extend from the pad backplate in a direction generally perpendicular to the plane of the backplate, such that the springs 496, 596, 696, 796 will engage the caliper surface and provide the advantages of the invention.

It will be appreciated that numerous changes may be made within the scope of the present invention. For example, certain aspects of the invention may be applicable to other types of disc brake, such as electromechanically actuated brakes. Further, whilst the brake pads have only one spring mounted thereto, in other embodiments two or more such springs may be provided.

In an alternative arrangement, instead of a separate spring 496, 596, 696, 796 that is secured to the backplate of the brake pad, the spring could be integral with the backplate of the relevant brake pad. For example, although not shown in the figures, the backplate could be of sheet material sufficiently thin that a top portion of the backplate can be formed into the spring during manufacture of the brake pad, e.g. by curving or angling it in a similar way to the separate components shown in Figures 11A to 15, such that it would extend in a direction generally perpendicular to the plane of the backplate. Advantageously, this arrangement would obviate the need to provide a manufacturing operation to secure the spring to the backplate of the pad.

## Claims

1. A friction element for mounting to an air actuated disc brake, the friction element comprising:
a volume of friction material having a friction face arranged to contact and retard rotation of a brake rotor in use;
a support face opposing the friction face and arranged to contact a portion of a caliper of a disc brake in use; and
a resilient element secured to or integral with the support face, and extending away from the support face in a direction generally perpendicular to a plane of the support face,
wherein the resilient element is arranged to be resiliently deformable in a direction generally parallel to the plane of the support face, and have a surface arranged to engage a radially outer surface of the brake caliper.

2. The friction element of claim 1, wherein the resilient element is a spring.

3. The friction element of claim 2, wherein the spring is a curved or angled portion of sheet or wire material.

4. The friction element of claim 3, wherein the spring is curved or angled about an axis substantially parallel to the support face.

5. The friction element of claim 3, wherein the spring is curved or angled about an axis generally normal to the support face.

6. The friction element of any of claims 2 to 5, wherein the spring is curved or angled to define a travel limit for resilient deflection thereof.

7. The friction element of claim 6, wherein an air gap is defined between a free end of the spring and a radially upper surface of the radially outwardly extending portion of the spring.

8. The friction element of claim 6 or claim 7, wherein the spring extends from the support face axially outwardly then radially outwardly and then radially inwardly.

9. The friction element of any preceding claim, wherein the resilient element is arranged to define a contact point that will engage a friction element retaining member when the friction element is installed in a disc brake, preferably wherein the contact point is arranged to be at a position further radially outward than a radially outermost extent of the friction material, even more preferably wherein the resilient element extends from the support face at a point closer to radially outermost extent of the friction material than to a midpoint of the element in a radial direction.

10. The friction element of any previous claim, wherein the friction material is mounted to a substantially rigid supporting plate having the support face, and the resilient element is secured to the supporting plate.

11. The friction element of claim 10, wherein the resilient element is secured to the supporting plate with a permanent fastening arrangement.

12. The friction element of any of claims 1 to 9, wherein the resilient element is integral with the support face.

13. A heavy vehicle disc brake comprising a brake caliper, a first friction element and a second friction element, the caliper being arranged to apply a clamp force to a first friction element and a second friction element to be positioned adjacent opposing faces of a brake rotor, wherein at least one of the friction elements is as defined in any previous claim.

14. The heavy vehicle disc brake of claim 13, further comprising a friction element retaining member extending over the first and second friction elements to retain them in the disc brake, wherein the resilient element is arranged to engage the friction element retaining member and a radially outer surface of the brake caliper.

15. The heavy vehicle disc brake of claim 13, wherein an air gap is defined between the friction element retaining member and the resilient element.
